# EUROPÄISCHE PATENTSCHRIFT

(11) **EP 1 339 261 B1**
(45) Veröffentlichungstag und Bekanntmachung des Hinweises auf die Patenterteilung: **23.12.2009**
(21) Anmeldenummer: 03004101.6
(22) Anmeldetag: 25.02.2003
(51) Int. Cl.: H05B 3/82

(54) **Beheizbare Leitung**
Heatable conductor
Conducteur chauffable

(30) Priorität: 25.02.2002 DE 10207794
(43) Veröffentlichungstag der Anmeldung: 27.08.2003
(73) Patentinhaber: Winkler Gesellschaft mit beschränkter Haftung, 69126 Heidelberg (DE)
(72) Erfinder: Winkler, Klaus, 69126 Heidelberg (DE)
(74) Vertreter: Naumann, Ulrich

(56) Entgegenhaltungen:
- US-A- 5 832 178

## Beschreibung

Die Erfindung betrifft eine beheizbare Leitung für ein temperiertes strömungsfähiges Medium, insbesondere Schlauchleitung, mit einer einen Strömungspfad bildenden Innenseele, einer die Innenseele umgebenden Heizeinrichtung und einer die Innenseele mit der Heizeinrichtung umgebenden thermischen Isolation, wobei in unmittelbarer Nähe der Innenseele ein Wärmesensor und/oder eine Temperatursicherung vorgesehen ist, der bzw. die die Stromversorgung der Heizeinrichtung bei Überschreiten einer vorgegebenen Temperatur deaktiviert.

Beheizbare Leitungen der hier in Rede stehenden Art sind in den unterschiedlichsten Ausführungsformen aus der Praxis bekannt. Lediglich beispielhaft sei nachfolgend der beheizbare Schlauch genannt. Dabei handelt es sich üblicher Weise um einen flexiblen Schlauch mit einer entsprechenden flexiblen Innenseele, gegebenenfalls einer Edelstahlumklöppelung der Innenseele, einem darum gewickelten Heizleiter, einer thermischen Isolation des Heizleiters aus Glasfasergewebe und einer weiteren thermischen Isolation aus aufgeschäumtem Gummi oder dergleichen. Zur Vermeidung von Beschädigung der thermischen Isolation aus geschäumten Gummi ist darum meist ein Außengeflecht aus Kunststoff oder dergleichen vorgesehen. Beidseits des Schlauches, d. h. an den jeweiligen Enden, sind in der Regel Anschlusskappen aus Silikon vorgesehen, wobei an einer der Anschlusskappen der elektrische Anschluss für den Heizleiter von innerhalb der Leitung nach außen tritt. Zum Anschluss an Anlagen, Maschinen oder andere Leitungen sind üblicherweise Armaturen bzw. Anschlussnippel oder Anschlusspins vorgesehen.

Beheizabre Leitungen bzw. Heizschläuche der hier in Rede stehenden Art werden beispielsweise als Messleitungen für Probengasmessungen, Extruderschweissanlagen, in der Heissleimklebetechnik, der Nahrungsmittelindustrie, der chemischen Industrie, für Abfüllvorrichtungen, Etikettiermaschinen, PU-Schaumspritzanlagen, Ölbrennerzuleitungen, Schwerölleitungen, etc. verwendet. Das innerhalb der Leitung bzw. innerhalb der Innenseele der Leitung zu transportierende Medium ist durch die Leitung auf einer bestimmten vorgegebenen Temperatur zu halten. Entsprechend dem Einsatz kann die Wärmeisolation der beheizbaren Leitung sehr unterschiedlich sein. So können auch mehrschichtige thermische Isolationen aus Glasfasergewebe und Silikonschaum vorgesehen sein.

Aus der DE 41 35 082 C1 ist eine beheizbare Leitung bekannt. Die Heizung der Heizleitung ist elektrisch/elektronisch geregelt. Ist die Regelung - warum auch immer - defekt, so ist ein Überhitzen des zu transportierenden Mediums die Folge. Ein Überhitzungsschutz ist dort jedenfalls nicht vorgesehen.

Des Weiteren ist aus der US-A-5 832 178 eine beheizbare Leitung mit den Merkmalen des Oberbegriffs des Patentanspruchs 1 bekannt.

Der vorliegenden Erfindung liegt die Aufgabe zugrunde, die gattungsbildende beheizbare Leitung derart auszugestalten und weiterzubilden, dass ein einfaches Einbringen und ein einfacher Austausch des Wärmesensors und/oder der Temperatursicherung ermöglicht sind.

Die beheizbare Leitung für ein temperiertes strömungsfähiges Medium löst die voranstehende Aufgabe durch die Merkmale des Patentanspruchs 1. Danach ist die Eingangs genannte beheizbare Leitung derart ausgestaltet und weitergebildet, dass sich in Längsrichtung der Innenseele auf oder unter der Heizeinrichtung ein Rohr erstreckt, in das der Wärmesensor bzw. die Temperatursicherung einschiebbar ist.

Erfindungsgemäß erstreckt sich in Längsrichtung der Innenseele auf oder unter der Heizeinrichtung ein Rohr, in das der Wärmesensor oder die Temperatursicherung einschiebbar ist. Dadurch ist eine besondere Aufnahme für den Wärmesensor bzw. die Temperatursicherung vorgesehen, die einerseits zur sicheren Positionierung und andererseits zum einfachen Einbringen und somit auch zum Austauschen des Wärmesensors bzw. der Temperatursicherung dient. Sofern sich das Rohr über die gesamte Länge der Innenseele hinweg erstreckt, ließe sich der Wärmesensor bzw. die Temperatursicherung an beliebiger Stelle positionieren, nämlich durch das Maß des Hineinschiebens in das Rohr. In weiter vorteilhafter Weise könnte das Rohr aus einem flexiblem Material hergestellt sein, so dass sich die beheizbare Leitung elastisch verformen lässt. Im Falle einer starren Ausgestaltung des Rohrs oder einer plastischen Verfombarkeit könnte das Rohr zur Versteifung und somit auch zur Formgebung der gesamten beheizbaren Leitung beitragen.

Ein Wärmesensor dient der Temperaturüberwachung und bewirkt - bei Überschreiten einer vorgegebenen Temperatur - ein Abschalten der Heizeinrichtung. Eine Temperatursicherung schaltet dagegen die Heizeinrichtung unmittelbar ab, ohne dass dazu eine separate Elektronik erforderlich ist, nämlich dadurch, dass sie in herkömmlicher Weise wirkt und unmittelbar die Stromversorgung der Heizeinrichtung unterbricht.

Bei der Heizeinrichtung handelt es sich in ganz besonders vorteilhafter Weise um einen elektrischen Heizleiter, der sich ganz einfach dadurch deaktivieren lässt, dass man dessen Stromversorgung unterbricht. Dies kann gemäß den voranstehenden Ausführungen erfolgen.

Im Konkreten könnte das zur Aufnahme des Wärmesensors und/oder der Temperatursicherung dienende Rohr eine Einschuböffnung aufweisen, die durch die Isolation hindurch von außen zugänglich ist, so dass der Wärmesensor bzw. die Temperatursicherung von außen in das Rohr einschiebbar ist. Zur Erleichterung des Einschiebens könnte sich wiederum an die Einschuböffnung des Rohrs ein sich nach außen erstreckendes Anschlusstück anschließen, welches sich vom Rohr aus in einem stumpfen Winkel, vorzugsweise im Bereich zwischen 30° und 60° zum Rohr, nach außen erstreckt. Bei eingeschobenem Wärmesensor bzw. bei eingeschobener Temperatursicherung und bei sich durch das Anschlusstück nach außen erstreckender Leitung könnten wiederum der Durchgang durch das Anschlusstück und/oder die Einschuböffnung thermisch isoliert sein. Mit dieser zusätzlichen Maßnahme wäre der Wärmeübergang von innerhalb der Leitung nach außen reduziert, so dass keine weiteren wärmeisolierenden Maßnahmen erforderlich sind. Eine aktive Wärmeisolation durch Vorkehrung einer Zusatzheizung könnte an dieser Stelle ebenfalls vorgesehen sein.

Zum besseren Zugriff auf das Anschlusstück bzw. auf die Einschuböffnung könnte die zusätzliche thermische Isolierung entfernbar ausgestaltet sein, so dass ein Austausch des Wäremsensors bzw. der Temperatursicherung jederzeit möglich ist. Beliebig entfernbare isolierende Maßnahmen sind hier denkbar.

Das Anschlusstück könnte im Sinne einer Einschubhilfe zum Einschieben bzw. Einstecken des Wärmesensors oder der Temperatursicherung als besonderes Formteil ausgebildet sein, welches in besonders vorteilhafter Weise aus einem thermisch nicht oder gering leitenden Material hergestellt ist. Ein Kunststoff-Anschlusstück wäre von besonderem Vorteil, zumal sich dieses spritzgusstechnisch herstellen ließe. Im Konkreten könnte das Anschlusstück in die Einschuböffnung des Rohrs eingesteckt sein. Ebenso ist es denkbar, das Anschlussstück auf die Einschuböffnung des Rohrs aufzusetzen, aufzustecken oder eben entsprechend einzustecken.

Im Rahmen einer besonders einfachen Ausgestaltung der beheizbaren Leitung und des dort vorgesehenen Überhitzungsschutzes könnte das Anschlusstück integraler Bestandteil des Rohrs sein. So wäre es beispielsweise denkbar, das Anschlussstück als weggebogenes Endstück des Rohrs auszugestalten, so dass das Rohr mit seinem freien - weggebogenen - Ende durch die thermische Isolation hindurch nach außen ragt. Bei entsprechend ausgestalteten Einschuböffnungen könnten über den Verlauf des Rohrs hinweg auch mehrere Anschlusstücke an- bzw. eingesteckt sein, beispielsweise in vorgegebenen Abständen zueinander. Gerade über lange Leitungen hinweg ließen sich mehrere Maßnahmen zum Überhitzungsschutz gemäß den voranstehenden Ausführungen vorsehen.

Im Konkreten könnte die Temperatursicherung als Temperaturwächter bzw. als Bimetallschalter ausgebildet sein. Dabei könnte die Temperatursicherung derart ausgelegt sein, dass sie bei Überschreiten einer vorgegebenen oder vorgebbaren Temperatur die Stromversorgung der Heizeinrichtung abschaltet und bei Unterschreiten einer vorgegebenen oder vorgebbaren Temperatur die Stromversorgung der Heizeinrichtung wieder aktiviert. Die erneute Aktivierung der Stromversorgung könnte wiederum nach einer vorgegebenen oder vorgebbaren Zeitverzögerung - nach Abschalten der Stromversorgung - erfolgen, so dass der Vorgang des Überprüfens erneut stattfindet. Ein wirksamer Überhitzungsschutz wäre mit einfachen Mitteln realisiert.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung zweier Ausführungsbeispiele der Erfindung anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltungen und Weiterbildungen der Lehre erläutert. In der Zeichnung zeigt
- Fig. 1: in einer schematischen Darstellung ein erstes Ausführungsbeispiel einer erfindungsgemäßen Leitung, wobei dort das Anschlusstück integral als weggebogenes freies Ende des Rohrs ausgebildet ist und
- Fig. 2: in einer schematischen Darstellung ein zweites Ausführungsbeispiel einer erfindungsgemäßen Leitung, wobei dort das Anschlusstück auf das Rohr unmittelbar an einer Einschuböffnung aufgesteckt ist.

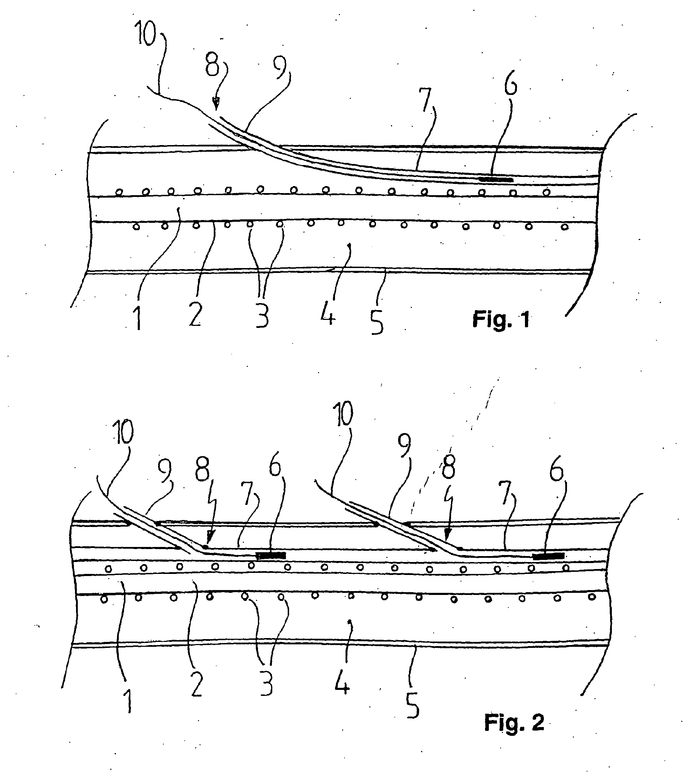

Fig. 1 zeigt ein erstes Ausführungsbeispiel einer beheizbaren Leitung für ein temperiertes strömungsfähiges Medium, wobei es sich bei dem gezeigten Ausführungsbeispiel um eine Schlauchleitung handelt. Der Strömungspfad 1 wird durch eine Innenseele 2 gebildet, die im Sinne einer flexiblen Rohrleitung ausgeführt ist. Um diese Rohrleitung herum kann eine in den Figuren nicht gezeigte Umflechtung zum Schutz der Rohrleitung vorgesehen bzw. angeordnet sein.

Die Innenseele 2 ist von einer Heizeinrichtung 3 unmittelbar umgeben, wobei es sich dabei im Konkreten um einen elektrischen Heizleiter handelt. Die Heizeinrichtung 3 ist um die Innenseele 2 herum gewickelt, so dass über die gesamte Länge der Innenseele 2 hinweg eine aktive Beheizung des Strömungspfads 1 gewährleistet ist. Die Innenseele 2 und die Heizeinrichtung 3 sind wiederum von einer thermischen Isolation 4 umgeben. Zum Schutze der thermischen Isolation 4 ist diese von einem geflochtenem Schutzmantel 5 umgeben, wobei es sich hierbei regelmäßig um einen mechanischen Schutz handelt.

Erfindungsgemäß ist in unmittelbarer Nähe der Innenseele 2 ein Wärmesensor und/oder eine Temperatursicherung 6 vorgesehen, wobei es sich bei den hier gewählten Ausführungsbeispielen um eine Temperatursicherung 6 handelt. Die Temperatursicherung 6 deaktiviert die in den Figuren nicht gezeigte Stromversorgung der Heizeinrichtung 3 bei Überschreiten einer vorgegebenen Temperatur, so dass ein Überschreiten eines vorgegebenen Temperaturgrenzwerts wirksam vermieden ist. Als Temperatursicherung kann eine Schmelzsicherung, ein Bimetallschalter, ein Temperaturwächter oder dergleichen dienen.

Bei den in den Figuren 1 und 2 gezeigten Ausführungsbeispielen erstreckt sich in Längsrichtung der Innenseele 2 und der Heizeinrichtung 3 ein Rohr 7, welches zur Aufnahme der Temperatursicherung 6 dient. Entsprechend der Länge des Rohrs 7 lässt sich die Temperatursicherung 6 an beliebiger Stelle positionieren und vor allem - im Falle eines Defekts - austauschen.

Die Figuren 1 und 2 zeigen gemeinsam, dass das Rohr 7 eine Einschuböffnung 8 aufweist, die durch die Isolation hindurch nach außen zugänglich ist, so dass die Temperatursicherung 6 von außen in das Rohr 7 einschiebbar ist.

Die Figuren 1 und 2 zeigen des Weiteren, dass sich an die Einschuböffnung 8 des Rohrs 7 ein sich nach außen erstreckendes Anschlusstück 9 anschließt, welches im Bereich zwischen 30° und 60° zum Rohr 7 gebogen ist und sich entsprechend nach außen erstreckt. Bei eingeschobener Temperatursicherung 6 und sich durch das Anschlusstück 9 nach außen erstreckender Leitung 10 ist der Durchgang durch das Anschlusstück 9 bzw. die Einschuböffnung 8 thermisch isoliert, was in den Figuren nicht gezeigt ist. Diese thermische Isolation lässt sich zum freien Zugang der Einschuböffnung 8 bzw. des Anschlusstücks 9 entfernen.

Bei dem in Fig. 1 gezeigten Ausführungsbeispiel ist das Anschlusstück 9 als freies, weggebogenes Ende des Rohrs 7 ausgebildet und erstreckt sich durch die thermische Isolation 4 hindurch nach außen. Dabei handelt es sich um eine ganz besondere Ausführung des Rohrs 7 mit integralem Anschlusstück 9.

Bei dem in Fig. 2 gezeigten Ausführungsbeispiel sind zwei Einschuböffnungen 8 und Anschlusstücke 9 vorgesehen, die als besondere Formteile ausgebildet sind und jeweils an die Einschuböffnungen 8 des Rohrs 7 angesteckt bzw. dort festgelegt sind. Beliebige Materialien lassen sich für die Anschlusstücke 9 verwenden, wobei in vorteilhafter Weise spritzgusstechnisch hergestellte Kunststoffteile verwendet werden, die sich entsprechend der schematischen Darstellung in Fig. 2 an die Einschuböffnung 8 des Rohrs 7 anstecken lassen. So sind über die gesamte Länge der Leitung hinweg mehrere Anschlusstücke 9 vorsehbar, die den Einschub mehrerer Temperatursicherungen 6 ermöglichen.

Zur Vermeidung von Wiederholungen wird ansonsten auf die allgemeine Beschreibung verwiesen.

Schließlich sei angemerkt, dass die voranstehend erörterten Ausführungsbeispiele zur beispielhaften Erörterung der beanspruchten Lehre dienen, diese jedoch nicht auf die beiden Ausführungsbeispiele einschränken.

## Patentansprüche

1. Beheizbare Leitung für ein temperiertes strömungsfähiges Medium, insbesondere Schlauchleitung, mit einer einen Strömungspfad (1) bildenden Innenseele (2), einer die Innenseele (2) umgebenden Heizeinrichtung (3) und einer die Innenseele (2) mit der Heizeinrichtung (3) umgebenden thermischen Isolation (4), wobei in unmittelbarer Nähe der Innenseele (2) ein Wärmesensor und/oder eine Temperatursicherung (6) vorgesehen ist, der bzw. die die Stromversorgung der Heizeinrichtung (3) bei Überschreiten einer vorgegebenen Temperatur deaktiviert,
**dadurch gekennzeichnet, dass** sich in Längsrichtung der Innenseele (2) auf oder unter der Heizeinrichtung (3) ein Rohr (7) erstreckt, in das der Wärmesensor bzw. die Temperatursicherung (6) einschiebbar ist.

2. Leitung nach Anspruch 1, **dadurch gekennzeichnet, dass** die Heizeinrichtung (3) einen elektrischen Heizleiter umfasst.

3. Leitung nach Anspruch 1 oder 2, **dadurch gekennzeichnet, dass** das Rohr (7) eine Einschuböffnung (8) aufweist, die durch die Isolation (4) hindurch von außen zugänglich ist, so dass der Wärmesensor bzw. die Temperatursicherung (6) von aussen in das Rohr (7) einschiebbar ist und/oder dass sich an die Einschuböffnung (8) des Rohrs (7) ein sich nach außen erstreckendes Anschlusstück (9) anschließt und/oder dass sich das Anschlusstück (9) vom Rohr (7) aus in einem stumpfen Winkel, vorzugsweise im Bereich zwischen 30° und 60° zum Rohr (7), nach außen erstreckt.

4. Leitung nach Anspruch 3, **dadurch gekennzeichnet, dass** bei eingeschobenem Wärmesensor bzw. bei eingeschobener Temperatursicherung (6) und sich durch das Anschlusstück (9) nach aussen erstreckender Leitung (10) der Durchgang durch das Anschlusstück (9) und/oder die Einschuböffnung (8) thermisch isoliert ist bzw. sind, wobei die thermische Isolierung zum freien Zugang der Einschuböffnung (8) entfernbar sein kann.

5. Leitung nach Anspruch 3 oder 4, **dadurch gekennzeichnet, dass** das Anschlusstück (9) als besonderes Formteil ausgebildet ist und/oder aus einem thermisch nicht oder gering leitenden Material hergestellt ist und/oder aus Kunststoff gefertigt ist und/oder spritzgusstechnisch hergestellt ist.

6. Leitung nach einem der Ansprüche 3 bis 5, **dadurch gekennzeichnet, dass** das Anschlusstück (9) in die Einschuböffnung (8) des Rohrs (7) eingesteckt ist und/oder auf die Einschuböffnung (8) des Rohrs (7) aufgesetzt, aufgesteckt oder in die Einschuböffnung (8) eingesteckt ist.

7. Leitung nach einem der Ansprüche 3 bis 6, **dadurch gekennzeichnet, dass** das Anschlusstück (9) integraler Bestandteil des Rohrs (7) ist, wobei das Anschlusstück (9) ein weggebogenes Endstück des Rohrs (7) sein kann.

8. Leitung nach einem der Ansprüche 3 bis 7, **dadurch gekennzeichnet, dass** in vorgegebenen Abständen mindestens zwei Einschuböffnungen (8) mit jeweils einem Anschlusstück (9) vorgesehen sind.

9. Leitung nach einem der Ansprüche 1 bis 8, **dadurch gekennzeichnet, dass** die Temperatursicherung (6) als Temperaturwächter bzw. als Bimetallschalter ausgebildet ist.

10. Leitung nach einem der Ansprüche 1 bis 9, **dadurch gekennzeichnet, dass** die Temperatursicherung (6) derart ausgelegt ist, dass sie bei Überschreiten einer vorgegebenen oder vorgebbaren Temperatur die Stromversorgung der Heizeinrichtung (3) abschaltet und bei Unterschreiten einer vorgegebenen oder vorgebbaren Temperatur die Stromversorgung der Heizeinrichtung (3) wieder aktiviert, wobei die erneute Aktivierung der Stromversorgung nach einer vorgegebenen oder vorgebbaren Zeitverzögerung - nach Abschalten der Stromversorgung - erfolgen kann.

## Claims

1. Heatable conduit for a temperature-controlled flowable medium, in particular a sheathed flexible conduit, having an inner core (2) forming a flow pathway (1), a heating device (3) surrounding the inner core (2), and a thermal insulator (4) surrounding the inner core (2) plus the heating device (3), wherein a heat sensor and/or a thermal fuse (6) is provided in the immediate vicinity of the inner core (2), the heat sensor or thermal fuse deactivating the power supply to the heating device (3) if a preset temperature is exceeded,
**characterised in that** a pipe (7) extends in the longitudinal direction of the inner core (2) on or beneath the heating device (3), into which pipe (7) the heat sensor or thermal fuse (6) is insertable.

2. Conduit according to claim 1, **characterised in that** the heating device (3) comprises an electrical heat conductor.

3. Conduit according to either claim 1 or claim 2, **characterised in that** the pipe (7) has an insertion opening (8) accessible from the outside via the insulator (4), so that the heat sensor or thermal fuse (6) is insertable into the pipe (7) from the outside and/or a connector (9) extending towards the outside is connected to the insertion opening (8) of the pipe (7) and/or the connector (9) extends from the pipe (7) towards the outside at an obtuse angle, preferably within the range from 30° to 60° to the pipe (7).

4. Conduit according to claim 3, **characterised in that**, with the heat sensor or thermal fuse (6) inserted and the wire (10) extending towards the outside via the connector (9), the passage through the connector (9) and/or the insertion opening (8) is/are thermally insulated, wherein the thermal insulation may be removable for free access to the insertion opening (8).

5. Conduit according to either claim 3 or claim 4, **characterised in that** the connector (9) is in the form of a special moulded part and/or is manufactured from a material which is thermally non-conductive or of low conductivity and/or is made of a plastics material and/or is manufactured by injection moulding.

6. Conduit according to any one of claims 3 to 5, **characterised in that** the connector (9) is plugged into the insertion opening (8) of the pipe (7) and/or is attached or fitted onto the insertion opening (8) of the pipe (7) or is plugged into the insertion opening (8).

7. Conduit according to any one of claims 3 to 6, **characterised in that** the connector (9) is an integral component of the pipe (7), wherein the connector (9) may be an end piece of the pipe (7) which is curved away.

8. Conduit according to any one of claims 3 to 7, **characterised in that** at least two insertion openings (8) at preset distances are each provided with a connector (9).

9. Conduit according to any one of claims I to 8, **characterised in that** the thermal fuse (6) is in the form of a temperature controller or a bimetallic release.

10. Conduit according to any one of claims 1 to 9, **characterised in that** the thermal fuse (6) is designed in such a way that it cuts off the power supply to the heating device (3) when a preset or presettable temperature is exceeded, and reactivates the power supply to the heating device (3) when the temperature falls below a preset or presettable level, wherein reactivation of the power supply may - after switching off the power supply - occur after a preset or presettable time delay.

## Revendications

1. Conduite chauffable pour un fluide tempéré pouvant s'écouler, notamment conduite en tuyau souple, avec une âme (2) formant un chemin d'écoulement (1), un dispositif de chauffage (3) entourant l'âme (2) et une isolation thermique (4) entourant le dispositif de chauffage (3), dans lequel est prévu, à proximité immédiate de l'âme (2), un détecteur de température et/ou une sécurité réagissant à la température (6), qui, désactive l'alimentation électrique du dispositif de chauffage (3) lorsqu'une température prédéterminée est dépassée, **caractérisée en ce qu'**un tube (7) s'étend dans la direction longitudinale de l'âme (2) sur ou au-dessous du dispositif de chauffage (3), dans lequel le détecteur de température ou sécurité de température (6) peut être introduit(e).

2. Conduite selon la revendication 1, **caractérisée en ce que** le dispositif de chauffage (3) comprend un conducteur chauffant électrique.

3. Conduite selon la revendication 1 ou 2, **caractérisée en ce que** le tube (7) présente une ouverture d'introduction (8) qui est accessible de l'extérieur à travers l'isolation (4) de sorte que le détecteur de température ou sécurité de température (6) puisse être introduit(e) dans le tube (7) depuis l'extérieur et/ou **en ce qu'**un embout (9) s'étendant vers l'extérieur se raccorde à l'ouverture d'introduction (8) du tube (7) et/ou **en ce que** l'embout (9) s'étend vers l'extérieur selon un angle obtus depuis le tube (7), de préférence dans la plage des 30 à 60° par rapport au tube (7).

4. Conduite selon la revendication 3, **caractérisée en ce que** lorsque le détecteur de température ou sécurité de température (6 )est introduit et que la conduite (10) s'étend vers l'extérieur par l'embout (9), le passage par l'embout (9) et/ou l'ouverture d'introduction (8) est (sont) thermiquement isolé(s), l'isolation thermique peut être retirée pour laisser libre l'accès à l'ouverture d'introduction (8).

5. Conduite selon la revendication 3 ou 4, **caractérisée en ce que** l'embout (9) est réalisé avec une forme particulière et/ou fabriqué en un matériau pas ou faiblement conducteur thermique et/ou en matière plastique et/ou moulé par injection.

6. Conduite selon l'une des revendications 3 à 5, **caractérisée en ce que** l'embout (9) est enfoncé dans l'ouverture d'introduction (8) du tube (7) et/ou monté, enfilé sur l'ouverture d'introduction (8) du tube (7) ou enfoncé dans l'ouverture d'introduction (8).

7. Conduite selon l'une des revendications 3 à 6, **caractérisée en ce que** l'embout (9) fait partie intégrante du tube (7), l'embout (9) pouvant être une extrémité repliée du tube (7).

8. Conduite selon l'une des revendications 3 à 7, **caractérisée en ce qu'**il est prévu deux ouverture d'introduction (8) avec chacune un embout (9).

9. Conduite selon l'une des revendications 1 à 8, **caractérisée en ce que** la sécurité de température (6) est configurée comme une surveillance de température ou comme un interrupteur bilame.

10. Conduite selon l'une des revendications 1 à 9, **caractérisée en ce que** la sécurité de température (6) est configurée de telle manière qu'elle coupe l'alimentation électrique du dispositif de chauffage (3) lorsqu'une température prédéterminée ou prédéterminable est dépassée et réactive l'alimentation électrique du dispositif de chauffage (3) lors du passage au-dessous d'une température prédéterminée ou pré déterminable, la réactivation de l'alimentation électrique pouvant se produire, après un temps de temporisation prédéterminé ou pré déterminable, après la coupure de l'alimentation électrique.
